# EUROPEAN PATENT SPECIFICATION

(11) **EP 4 166 827 B1**
(45) Date of publication and mention of the grant of the patent: **09.09.2026**
(21) Application number: 21946246.2
(22) Date of filing: 29.12.2021
(51) Int. Cl.: F16K 7/07, F16K 27/02, H01M 50/609

(54) **VALVE CORE, PINCH VALVE, AND BATTERY ELECTROLYTE FILLING DEVICE**
VENTILKERN, QUETSCHVENTIL UND BATTERIEELEKTROLYTFÜLLVORRICHTUNG
OBUS DE VALVE, ROBINET À MANCHON DÉFORMABLE ET DISPOSITIF DE REMPLISSAGE D'ÉLECTROLYTE DE BATTERIE

(30) Priority: 26.08.2021 CN 202122035265 U
(43) Date of publication of application: 19.04.2023
(73) Proprietor: Wuxi Lead Intelligent Equipment Co., Ltd., Wuxi, Jiangsu 214123 (CN)
(72) Inventor: JIANG, Zhongyi, Wuxi, Jiangsu 214123 (CN); SUN, Jianjun, Wuxi, Jiangsu 214123 (CN); SUN, Yizhou, Wuxi, Jiangsu 214123 (CN)
(74) Representative: Kurig, Thomas
(86) International application number: PCT/CN2021/142471
(87) International publication number: WO 2023/024380

(56) References cited:
- EP-B1- 3 167 213
- WO-A2-2006/106485
- AT-T1- E 497 589
- AU-A4- 2018 101 478
- CN-A- 101 156 009
- CN-A- 104 712 787
- CN-A- 113 294 550
- DE-B3- 102007 006 764
- JP-A- 2005 207 470
- JP-A- H09 199 109
- US-B2- 7 168 444
- US-B2- 7 775 501

## Description

### RELATED APPLICATION

The application claims the priority of Chinese patent application No. 202122035265.3, filed on August 26, 2021, titled "Valve spool, Pinch Valve and Electrolyte Injection Device".

### TECNICAL FILED

The application relates to the technical field of valves, in particular to a valve spool, a pinch valve and an electrolyte injection device.

### BACKGROUND

As a common flow control device, pinch valves are widely used in fields like electrolyte injection of batteries. A main component of the pinch valve is a hose which can deform elastically, namely valve spool. In normal use, the on/off states of the pinch valve can be switched by squeezing the hose pneumatically, electrically or manually. However, after being deformed multiple times, the hose of the pinch valve is prone to aging and damage, thus leading to failures of the pinch valve.

US7775501B2 discloses a pinch valve having a hose-like valve member with a flexible peripheral wall adjacent to whose outer periphery two diametrally opposite pinch elements are arranged able to be moved toward and away from one another with a greater or lesser pinching of the peripheral wall while performing an operating movement athwart the valve member longitudinal axis. An annular actuating ring coaxially surrounding the valve member may act on the pinch elements for causing the operating movement. The actuating ring is placed in a working space surrounded radially from the outside by a peripheral valve housing wall and is able to be acted on by drive means separate from the actuating ring with a drive force controlling the actuating movement.

DE102007006764B3 discloses a valve 1 has a valve housing 2, in which a tubular-shape valve unit 14 with a flexible circumferential wall 13 extends between two fluid ports. The wall is squeezed together transverse to a longitudinal axis of the valve unit to change a flow cross section, and a support pipe 18 is limited by a radial expansion. The support pipe has shell units 26, 27 that are provided with an arched cross section and are arranged in a circumferential direction in the valve unit about the wall with respect to the longitudinal axis of the valve unit in a radial direction.

EP3167213B1 discloses a pinch valve 1 which has a valve housing 2 in which at both ends thereof, there is respectively arranged a valve element 4 having an annular fixing flange 18. The valve element 4 has a valve body 22 consisting of a rubbery-elastic material and having a tube-like central section 24 and flange sections 25a, 25b integrally molded thereon at the ends and belonging to the fixing flanges 18. Each flange section 25a, 25b has an annular fixing section 26 projecting radially over the central section 24, wherein an annular stiffening element 23 is embedded coaxially in each flange section 25a, 25b, which stiffening element extends into the fixing section 26 and effects stiffening of the end sections of the valve body 22.

WO2006106485A2 discloses a flexible valve comprising a flexible sleeve 3 inserted in a fluid line 2 and made with two circumferential folds 9a, b , two opposite slides 5,S located between the folds 9a, b displaceably in phase opposition and extending crosswise of the sleeve 3 , and means for displacing the slides 5, 6 between positions, in which they allow the sleeve 3 to be open to flow and a closed position, in which they pinch a closing section 11 between the folds 9a, b so tightly that the sleeve 3 is closed to through-flow. The folds 9a, b extend freely between the connections 8 of the sleeve 3 with the fluid line 2 and said closing section 11 which furthermore is supported by the slides 5, 6 .

JP 2005 207470 A discloses a pinch valve for pipes used in foodstuff industry, and has a tube with an opening formed in fusiform cross section with respect to vertical surface of tube in flow-path direction.

### SUMMARY

In view of the above problem, it is necessary to provide a valve spool, a pinch valve and an electrolyte injection device with a long service life.

A valve spool comprises an elastically deformable main body, the main body is provided with a squeezing channel and a pressure receiving portion, and two ends of the main body have openings communicating with the squeezing channel; wherein an inner wall of the squeezing channel comprises two oppositely arranged half-wall structures, a first axis and a second axis perpendicular to each other and intersected at respective midpoints are provided in a radial section of the squeezing channel, the first axis and the second axis jointly define a circle or an ellipse, and the two half-wall structures are distributed on two sides of the second axis and are both located within the circle or the ellipse;
the two half-wall structures are moved to be closer to each other by applying an external force to the pressure receiving portion to close the squeezing channel.
wherein each of the half-wall structures comprises a first curved wall and second curved walls connected to two ends of the first curved wall;
wherein the first curved wall protrudes toward an outside of the squeezing channel, the second curved walls protrude toward an inside of the squeezing channel, the first axis divides the first curved wall into two sections in the radial section of the squeezing channel, and the second curved walls gradually converge towards the second axis in an extending direction away from the first curved wall; and
wherein a middle of the main body contracts inward to form a contraction portion, the pressure receiving portion is located at the contraction portion, and the squeezing channel is only formed at a position of the main body corresponding to the contraction portion rather than running through the whole main body.

In one embodiment, each of the half-wall structures comprises a first curved wall and second curved walls connected to two ends of the first curved wall, the first curved wall protrudes toward the outside of the squeezing channel, the second curved walls protrude toward the inside of the squeezing channel, the first axis divides the first curved wall into two sections in the radial section of the squeezing channel, and the second curved walls gradually converge towards the second axis in an extending direction away from the first curved wall.

In one embodiment, in the radial section of the squeezing channel, two second curved walls at a same end of the two half-wall structures extend to the second axis and are connected to each other.

In one embodiment, two second curved walls at a same end of the two half-wall structures are connected through a third curved wall; and in the radial section of the squeezing channel, the second axis divides the third curved wall into two sections, and the third curved wall protrudes toward the outside of the squeezing channel.

In one embodiment, the third curved wall is smoothly connected with two adjacent second curved walls.

In one embodiment, each half-wall structure comprises two interconnected planar walls, and an included angle between the two planar walls is obtuse.

In one embodiment, the length of the first axis is less than that of the second axis.

A pinch valve comprises:
the valve spool in any one of the above preferred embodiments;
a valve body having a liquid inlet and a liquid outlet, the valve spool being received in the valve body, and the openings at two ends communicating with the liquid inlet and the liquid outlet respectively; and
an actuator comprising a power assembly and an abutting part, the power assembly being capable of driving the abutting part to act on the pressure receiving portion, so as to close the squeezing channel.

In one embodiment, the valve body is provided with an air inlet, the valve body is provided with an air chamber arranged around the circumference of the valve spool, and air is introduced into or discharged from the air chamber through the air inlet, so that the power assembly drives the abutting part to act on the pressure receiving portion to close the squeezing channel.

In one embodiment, the abutting part penetrates through an inner wall of the air chamber, and abuts against the pressure receiving portion, and the power assembly comprises:
a piston installed in the air chamber;
a guide sleeve fixed to an end of the piston and arranged around the circumference of the valve spool, the guide sleeve having an abutting inclined surface; and
an elastic part received in the air chamber and acting on the guide sleeve, the abutting inclined surface abutting against the abutting part under an action of the elastic part, and the abutting part acting on the pressure receiving portion to close the squeezing channel;
wherein, by introducing air to the air chamber, the piston drives the guide sleeve to slide along the air chamber against an elastic force of the elastic part, and then the abutting part retreats to open the squeezing channel.

Compared with traditional pinch valves, the pinch valve described above has at least the following advantages.
1. Compared with a circular or elliptical fluid channel, the above-mentioned squeezing channel has a thicker wall on the premise that the flow rate is roughly the same, so the pressure resistance and fatigue resistance of the main body of the valve spool are better, and the main body can still keep good elasticity after repeated switching. Therefore, the aging speed of the valve spool can be obviously slowed down, so that the pinch valve has a long service life.
2. Because of the large wall thickness, the main body of the valve spool can provide stronger support. During use of the pinch valve, unnecessary deformation of the valve spool caused by the pressure change in the squeezing channel can be prevented, thus ensuring the accuracy of flow control.
3. Compared with a circular or elliptical fluid channel, when the two half-wall structures abut against each other to close the squeezing channel, the moving distance of the abutting part is smaller, so that the pinch valve has a more timely opening and closing response.

An electrolyte injection device comprises the pinch valve in any one of the above preferred embodiments, an electrolyte injection cup and an electrolyte injection nozzle, wherein the electrolyte injection cup and the electrolyte injection nozzle communicate with the liquid inlet and the liquid outlet, respectively.

### BRIEF DESCRIPTION OF THE DRAWINGS

In order to explain the embodiments of the application or the technical scheme in the prior art more clearly, the following will briefly introduce the drawings needed in the description of the embodiments or the prior art. Obviously, the drawings in the following description are only some embodiments of the application. For those of ordinary skill in the art, other drawings can be obtained according to the following ones without creative labor.
Fig. 1 is a structural diagram of a pinch valve in a preferred embodiment of the application;
Fig. 2 is a cross-sectional view of the pinch valve shown in Fig. 1 along A-A;
Fig. 3 is a structural diagram of the pinch valve shown in Fig. 1 rotated 90 degrees around an axis;
Fig. 4 is a cross-sectional view of the pinch valve shown in Fig. 3 along B-B;
Fig. 5 is a front view of a valve spool of the pinch valve shown in Fig. 1;
Fig. 6 is a cross-sectional view of the valve spool shown in Fig. 5 along C-C;
Fig. 7 is a cross-sectional view of a valve spool in another embodiment along C-C; and
Fig. 8 is a cross-sectional view of a valve spool in a third embodiment along C-C.

### DETAILED DESCRIPTION OF THE EMBODIMENTS

In order to make the above objects, features and advantages of this application more obvious and understandable, the following detailed description of this application will be made with reference to the accompanying drawings. In the following description, numerous specific details are set forth to provide a thorough understanding of the application. However, this application can be implemented in many other ways different from those described here, and those skilled in the art can make similar improvements without violating the connotation of this application. Therefore, this application is not limited by the specific embodiments disclosed below, but only by the appended claims.

In the description of the application, it should be understood that directional or positional relationships indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential" are based on the directional or positional relationships shown in the drawings, which are only for the convenience of describing and simplifying the description, but do not indicate or imply that the referred devices or elements must have a specific orientation or be constructed and operated in a specific orientation, so they cannot be understood as limiting the application.

In addition, the terms "first" and "second" are only used for descriptive purposes, and cannot be understood as indicating or implying relative importance or implicitly indicating the number of indicated technical features. Therefore, the features defined with "first" and "second" may include one or more of the features explicitly or implicitly. In the description of this application, "multiple" means at least two, such as two, three, etc., unless otherwise specifically defined.

In the application, unless otherwise specified and defined, the terms "install", "connect" and "fix" should be understood in a broad sense. For example, it can be fixed connection, detachable connection or integrated connection; it can be mechanical connection or electric connection; and it can be direct connection, indirect connection through intermediate media or internal communication or interaction of two elements, unless otherwise explicitly defined. For those of ordinary skill in the art, the specific meaning of the above terms in the application can be understood in specific situations.

In this application, unless otherwise specified and limited, the expression that a first feature is "on" or "under" a second feature may mean that the first feature and the second feature are in direct contact, or the first feature and the second feature are in indirect contact through an intermediary. Further, the expression that the first feature is "above" the second feature may be that the first feature is directly above or obliquely above the second feature, or it only means that a level of the first feature is higher than that of the second feature; and the expression that the first feature is "below" the second feature may be that the first feature is directly below or obliquely below the second feature, or it only means that the level of the first feature is lower than that of the second feature.

It should be noted that when an element is described as being "fixed to" or "arranged on" another element, it may be directly on another element or there may be an intermediate element. When an element is considered to be "connected" to another element, it may be directly connected to another element or there may be an intermediate element. The terms "vertical", "horizontal", "upper", "lower", "left", "right" and similar expressions used herein are for the purpose of illustration only, and are not meant to be the only implementation way.

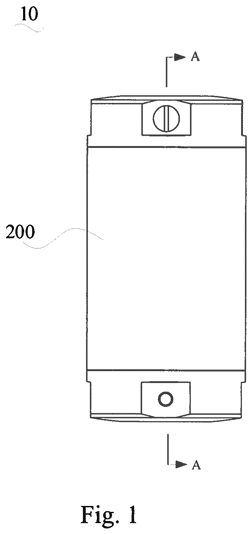

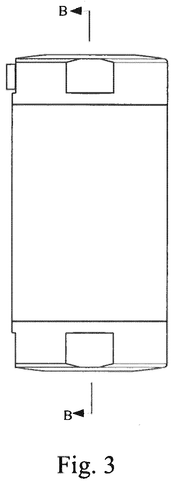

Referring to Figs. 1-4, the application provides a pinch valve 10 and a valve spool 100. The pinch valve 10 comprises a valve spool 100, a valve body 200 and an actuator 300.

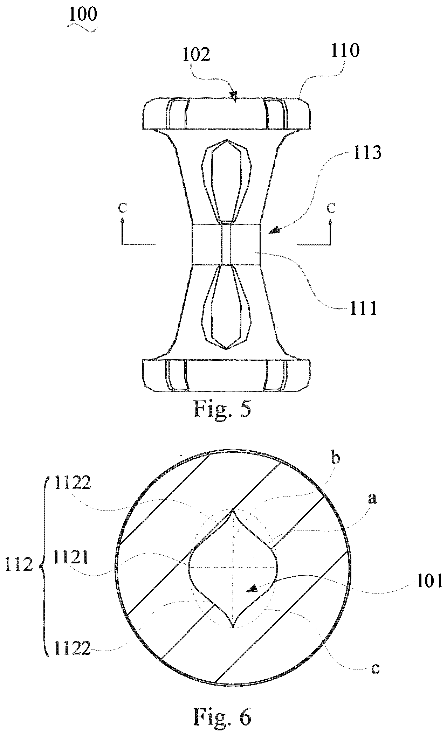

Referring to Fig. 5, the valve spool 100 comprises an elastically deformable main body 110, and the main body 110 is generally made of an elastic material such as rubber. The main body 110 is of a hollow structure with two open ends, that is, openings 102 are formed at two ends. The main body 110 is provided with a squeezing channel 101 and a pressure receiving portion 111, and the openings 102 at the two ends communicate with the squeezing channel 101. Specifically, the squeezing channel 101 can penetrate through the main body 110 and extend from the opening 102 at an end to the opening 102 at the other end. In addition, the squeezing channel 101 may only be a section of a hollow portion in the main body 110, and correspond to the pressure receiving portion 111 in position.

By acting on the pressure receiving portion 111, the main body 110 can be deformed and the squeezing channel 101 can be closed, so that the pinch valve 10 can be closed.

The valve body 200 is used for supporting and receiving the valve spool 100, and is generally of a cylindrical structure with two open ends. The valve body 200 has a liquid inlet 201 and a liquid outlet 202. The valve spool 100 is received in the valve body 200, and the openings 102 at two ends communicate with the liquid inlet 201 and the liquid outlet 202 respectively. Fluid, such as electrolyte, can enter the valve spool 100 through the liquid inlet 201, and then flow out through the liquid outlet 202 after flowing through the squeezing channel 101. The valve body 200 may be of an integrated structure or may be assembled from multiple parts. For example, in this embodiment, the valve body 200 comprises a base 210, a cylinder 230 and an upper cover 220, and the valve spool 100 can be positioned on the base 210 first, and then packaged by the cylinder 230 and the upper cover 220.

The actuator 300 comprises a power assembly 310 and an abutting part 320, and the power assembly 310 can provide power to drive the abutting part 320 to act on the pressure receiving portion 111, so as to close the squeezing channel 101. The abutting part 320 may be of a rod-shaped or block-shaped structure. The power assembly 310 can drive the abutting part 320 to move electrically, pneumatically or manually, so as to control the opening and closing states of the pinch valve 10.

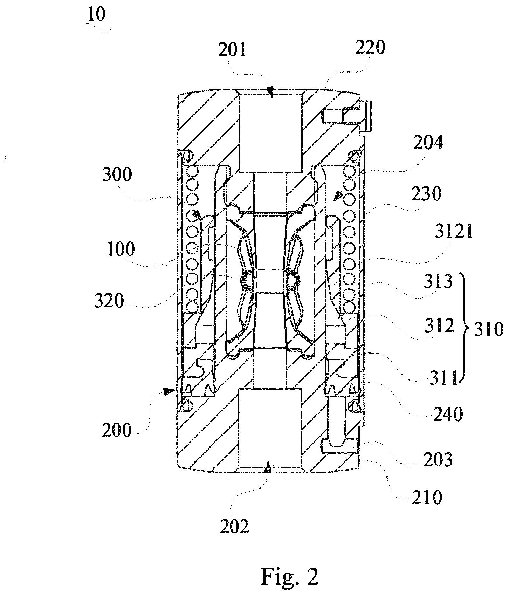

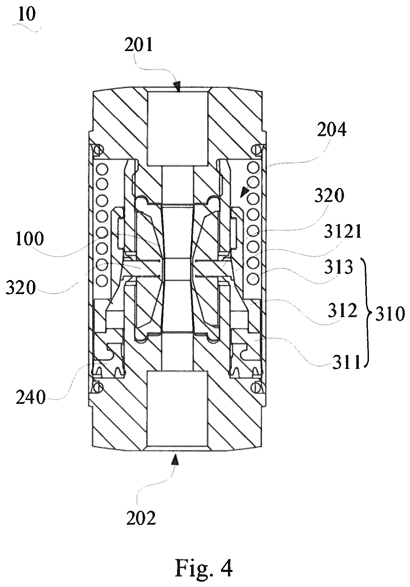

Referring to Figs. 2 and 4 again, in this embodiment, the valve body 200 is provided with an air inlet 203, and the valve body 200 is provided with an air chamber 204 arranged around the circumference of the valve spool 100. Air is introduced into or discharged from the air chamber 204 through the air inlet 203, so that the power assembly 310 can drive the abutting part 320 to act on the pressure receiving portion 111, so as to close the squeezing channel 101.

Specifically, the air chamber 204 is formed between the base 210, the upper cover 220 and the cylinder 230. In addition, a sealing ring 240 is arranged between the base 210 and the cylinder 230 to ensure the air tightness of the air chamber 204. Air is introduced into the air chamber 204 through the air inlet 203, so that the air pressure in the air chamber 204 rises, thereby driving the abutting part 320 to cancel the force acting on the pressure receiving portion 111. By discharging air from the air chamber 204 through the air inlet 203, the air pressure in the air chamber 204 can be reduced, thereby driving the abutting part 320 to act on the pressure receiving portion 111. That is, the initial state of the pinch valve 10 is normally closed, the force acting on the pressure receiving portion 111 can be canceled only when air is introduced into the air chamber 204 through the air inlet 203, and then the pinch valve 10 can be switched to the open state.

The abutting part 320 may be cylindrical, penetrate through an inner wall of the air chamber 204, and abut against the pressure receiving portion 111. By expanding and contracting the abutting part 320 relative to the pressure receiving portion 111, an external force can be applied to the pressure receiving portion 111, so as to close or open the pinch valve 10.

Further, in this embodiment, the power assembly 310 comprises a piston 311, a guide sleeve 312 and an elastic part 313.

The piston 311 is installed in the air chamber 204. After air is introduced into the air chamber 204, the piston 311 can be driven to slide along the air chamber 204. The guide sleeve 312 is fixed to an end of the piston 311 and is arranged around the circumference of the valve spool 100, and the guide sleeve 312 has an abutting inclined surface 3121. The elastic part 313 is received in the air chamber 204 and acts on the guide sleeve 312. Specifically, the elastic part 313 may be a compression spring. The abutting inclined surface 3121 abuts against the abutting part 320 under the action of the elastic part 313, so that the abutting part 320 acts on the pressure receiving portion 111 to close the squeezing channel 101. By introducing air to the air chamber 204, the piston 311 will drive the guide sleeve 312 to slide along the air chamber 204 against the elastic force of the elastic part 313, and then the abutting part 320 will retreat to open the squeezing channel 101.

As shown in Fig. 2, for example, in the initial state, the guide sleeve 312 abuts against a lower surface of the air chamber 204 under the action of the elastic part 313, and the abutting inclined surface 3121 drives the abutting part 320 to extend toward the valve spool 100, so that the squeezing channel 101 is closed and the pinch valve 10 is in a closed state. After air is introduced into the air chamber 204 through the air inlet 203, the piston 311 will be driven to slide upward. At the same time, the abutting inclined surface 3121 gradually releases the pressure on the abutting part 320, and the valve body 110 restores and pushes the abutting part 320 to retreat, so that the pinch valve 10 is switched to the open state.

It should be noted that in other embodiments, the initial state of the pinch valve 10 may also be normally open. In this case, by introducing air to the air chamber 204 through the air inlet 203, the air pressure in the air chamber 204 can be increased, thereby driving the abutting part 320 to act on the pressure receiving portion 111 to switch the pinch valve 10 to the closed state.

Referring to Figs. 6-8, an inner wall of the squeezing channel 101 comprises two oppositely arranged half-wall structures 112, in a radial section of the squeezing channel 101, a first axis a and a second axis b which are perpendicular to each other and intersect at midpoints are provided, the first axis a and the second axis b jointly define a circle or an ellipse, and the two half-wall structures 112 are distributed on two sides of the second axis b and are both located within the circle or the ellipse.

Specifically, the circle or ellipse defined by the first axis a and the second axis b together refers to a circle with the first axis a and the second axis b serving as a diameter, or an ellipse with the first axis a and the second axis b serving as a major axis and a minor axis. It should be noted that both the first axis a and the second axis b are virtual axes, not actual contour lines in the squeezing channel 101. In this embodiment, a length of the second axis b is greater than that of the first axis a, so they jointly define an ellipse c, and the second axis b and the first axis a serve as the major axis and the minor axis of the ellipse c respectively. It can be seen that compared with circular or elliptical holes, the squeezing channel 101 contracts inward to some extent.

An external force acting on the pressure receiving portion 111 can make the two half-wall structures 112 move closer to each other, so as to close the squeezing channel 101. Compared with a circular or elliptical fluid channel, the above-mentioned squeezing channel 101 has a thicker wall while ensuring an approximately identical flow rate, so the main body 110 of the valve spool 100 can provide stronger support. During use of the pinch valve 10, unnecessary deformation of the valve spool 100 caused by the pressure change in the squeezing channel 101 can be prevented, thus ensuring the accuracy of flow control. Because of the large wall thickness, the main body 110 of the valve spool 100 has more outstanding pressure resistance and fatigue resistance, and the main body 110 can still keep good elasticity after repeated switching. Moreover, a joint between the two half-wall structures 112 is small, and the deformation of the joint is small when the main body 110 is squeezed, so fatigue caused by frequent deformation can be prevented, which further prevents material cracking, damage and aging. Therefore, the pinch valve 10 has a long service life.

In addition, compared with a circular or elliptical fluid channel, when the two half-wall structures 112 abut against each other to close the squeezing channel 101, the moving distance of the abutting part 320 is smaller, so that the pinch valve 10 has a more timely opening and closing response.

In this embodiment, the length of the first axis a is less than that of the second axis b. That is to say, the squeezing channel 101 is longer and narrower, and the joint between the two half-wall structures 112 is smaller on the premise of ensuring an approximately identical flow rate, so the moving distance of the abutting part 320 can be further reduced when the squeezing channel 101 is closed.

In this embodiment, in the radial section of the squeezing channel 101, the two half-wall structures 112 are symmetrically arranged with the long axis b as the axis of symmetry. In this way, the symmetry of the two half-wall structures 112 is better, and the two half-wall structures 112 can be more closely matched when the squeezing channel 101 is closed, thus ensuring the closing reliability of the pinch valve 10.

Referring to Fig. 5 again, in this embodiment, the middle of the main body 110 contracts inward to form a contraction portion 113, the pressure receiving portion 111 is located at the contraction portion 113, and the squeezing channel 101 is formed at a position of the main body 110 corresponding to the contraction portion 113.

That is, the squeezing channel 101 is only formed at the position corresponding to the contraction portion 113 rather than running through the whole main body 110. The radial dimension of the contraction portion 113 is small, and when the squeezing channel 101 needs to be closed, the pressure receiving portion 111 is only slightly deformed, so the moving distance of the abutting part 320 can be significantly reduced, thereby further improving the response speed of the pinch valve 10 in the opening and closing process.

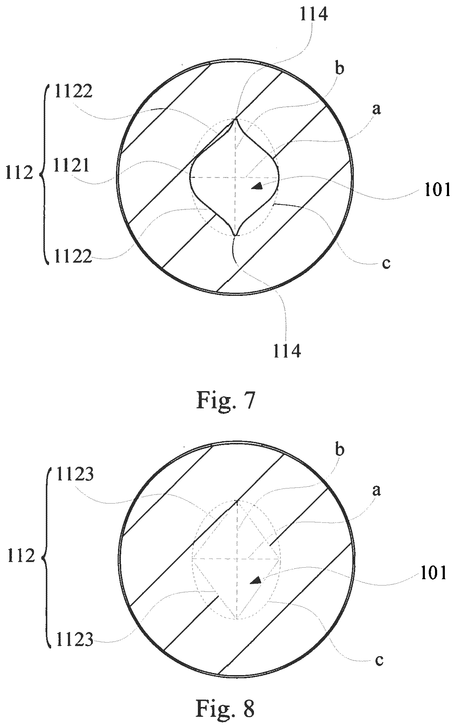

As shown in Figs. 6 and 7, in one embodiment, each half-wall structure 112 comprises a first curved wall 1121 and second curved walls 1122 connected to two ends of the first curved wall 1121. Further, the first curved wall 1121 protrudes toward the outside of the squeezing channel 101, and the second curved wall 1122 protrudes toward the inside of the squeezing channel 101.

That is, the curving direction of the first curved wall 1121 is opposite to that of the second curved wall 1122, and the first curved wall 1121 makes an area, corresponding to the first curved wall 1121, of the squeezing channel 101 expand outward, thus having a large flow area. The second curved wall 1122 makes an area, corresponding to the second curved wall 1122, of the squeezing channel 101 contract inward, thus reducing the flow area, but the wall thickness of an area, corresponding to the second curved wall 1122, of the main body 110 increases correspondingly.

Further, in the radial section of the squeezing channel 101, the first axis a divides the first curved wall 1121 into two sections, and the second curved wall 1122 gradually converges toward the second axis b in the extending direction away from the first curved wall 1121.

The second curved wall 1122 gradually converging toward the second axis b in the extending direction means that the second curved wall 1122 gradually approaches the second axis b. In this way, in the extending direction of the second curved wall 1122, the distance between the two half-wall structures 112 gradually decreases. Further, the first curved wall 1121 and the second curved wall 1122 make the inner wall of the half-wall structure 112 smoother, and the two half-wall structures 112 can better stick together when the squeezing channel 101 is closed.

Referring to Fig. 6 again, in a first embodiment, in the radial section of the squeezing channel 101, two second curved walls 1122 at the same end of the two half-wall structures 112 extend to the second axis b and are connected.

That is, the two second curved walls 1122 at an upper end as shown in the figure extend to an upper end of the second axis b and are connected, and the two second curved walls 1122 at a lower end extend to a lower end of the second axis b and are connected. In this way, the two half-wall structures 112 can stick together more easily, so that the pinch valve 10 has a better intercepting effect after being closed. Optionally, the two second curved walls 1122 at the upper end are tangent at the upper end of the second axis b, and the two second curved walls 1122 at the lower end are tangent at the lower end of the second axis b.

Referring to Fig. 7 again, in a second embodiment, two second curved walls 1122 at the same end of the two half-wall structures 112 are connected through a third curved wall 114. In the radial section of the squeezing channel 101, the second axis b divides the third curved wall 114 into two sections, and the third curved wall 114 protrudes toward the outside of the squeezing channel 101.

That is, transition between the second curved walls 1122 of the two half-wall structures 112 is realized by the third curved wall 114, thus avoiding the formation of a small angle between the two second curved walls 1122, and making the inner wall of the squeezing channel 101 smoother. In this way, fluid flowing through the squeezing channel 101 can be effectively prevented from being left in the squeezing channel 101, and the flow area of the squeezing channel 101 can be increased to some extent.

Further, in this embodiment, the third curved wall 114 is smoothly connected with two adjacent second curved walls 1122. In this way, the angle can be further avoided, so that the inner wall of the squeezing channel 101 has a smooth curved surface, and fluid residues can be further avoided.

Referring to Fig. 8 again, in a third embodiment, each half-wall structure 112 comprises two interconnected planar walls 1123, and an included angle between the two planar walls 1123 is obtuse.

In this case, the squeezing channel 101 has a diamond shape. It should be noted that the squeezing channel 101 is not limited to the shapes shown in the above three embodiments.

Based on the above, the application also provides an electrolyte injection device. The electrolyte injection device comprises a pinch valve 10, an electrolyte injection cup (not shown) and an electrolyte injection nozzle (not shown), and the electrolyte injection cup and the electrolyte injection nozzle respectively communicate with the liquid inlet 201 and the liquid outlet 202.

The electrolyte injection cup is used for storing an electrolyte, and the electrolyte injection nozzle is used for injecting the electrolyte into a battery case. During electrolyte injection, the pinch valve 10 is switched to the open state, the electrolyte in the electrolyte injection cup can flow to the electrolyte injection nozzle through the pinch valve 10, and then electrolyte injection is completed by the electrolyte injection nozzle. Since the pinch valve 10 can ensure the accuracy of flow control, the injection accuracy of the above electrolyte injection device is also high.

The technical features of the above embodiments can be combined freely. In order to make the description concise, not all possible combinations of the technical features in the above embodiments are described. However, as long as there is no contradiction in the combinations of these technical features, they should be considered as falling in the scope of the claims.

The above embodiments only represent several implementation ways of the application, and their descriptions are specific and detailed, but they cannot be understood as limiting the scope of the patent of the application. It should be pointed out that, for those of ordinary skill in the art, without departing from the concept of the application, several modifications and improvements can be made, which belong to the protection scope of the application. Therefore, the scope of protection of the patent of the application shall be subject to the appended claims.

## Claims

1. A valve spool (100), comprising an elastically deformable main body (110), the main body (110) being provided with a squeezing channel (101) and a pressure receiving portion(111), and two ends of the main body (110) having openings (102) communicating with the squeezing channel (101);
wherein an inner wall of the squeezing channel comprises two oppositely arranged half-wall structures (112), a first axis (a) and a second axis (b) perpendicular to each other and intersected at respective midpoints are provided in a radial section of the squeezing channel (101), the first axis (a) and the second axis (b) jointly define a circle or an ellipse, and the two half-wall structures (112) are distributed on two sides of the second axis (b) and are both located within the circle or the ellipse;
wherein the two half-wall structures (112) are moved to be closer to each other by applying an external force to the pressure receiving portion (111) to close the squeezing channel (101);
wherein each of the half-wall structures (112) comprises a first curved wall (1121) and second curved walls (1122) connected to two ends of the first curved wall (1121);
the valve spool (100) is **characterized in that**:
the first curved wall (1121) protrudes toward an outside of the squeezing channel (101), the second curved walls (1122) protrude toward an inside of the squeezing channel (101), the first axis (a) divides the first curved wall (1121) into two sections in the radial section of the squeezing channel (101), and the second curved walls (1122) gradually converge towards the second axis (b) in an extending direction away from the first curved wall (1121); and
a middle of the main body (110) contracts inward to form a contraction portion (113), the pressure receiving portion (111) is located at the contraction portion (113), and the squeezing channel (101) is only formed at a position of the main body (110) corresponding to the contraction portion (113) rather than running through the whole main body (110).

2. The valve spool of claim 1, wherein in the radial section of the squeezing channel (101), two second curved walls (1122) at a same end of the two half-wall structures (112) extend to the second axis (b) and are connected to each other.

3. The valve spool of claim 1, wherein two second curved walls (1122) at a same end of the two half-wall structures (112) are connected through a third curved wall (114); and in the radial section of the squeezing channel (101), the second axis (b) divides the third curved wall (114) into two sections, and the third curved wall (114) protrudes toward the outside of the squeezing channel (101).

4. The valve spool of claim 3, wherein the third curved wall (114) is smoothly connected with two adjacent second curved walls (1122).

5. The valve spool of claim 1, wherein each said half-wall structure (112) comprises two interconnected planar walls (1123), and an included angle between the two planar walls is obtuse.

6. The valve spool of any one of claims 1-5, wherein a length of the first axis (a) is less than that of the second axis (b).

7. A pinch valve (10), comprising:
the valve spool (100) of any one of claims 1-6;
a valve body (200), having a liquid inlet (201) and a liquid outlet (202), the valve spool (100) being received in the valve body (200), and the openings (102) at two ends communicating with the liquid inlet (201) and the liquid outlet (202) respectively; and
an actuator (300), comprising a power assembly (310) and an abutting part (320), the power assembly (310) being capable of driving the abutting part (320) to act on the pressure receiving portion (111) to close the squeezing channel (101).

8. The pinch valve (10) of claim 7, wherein the valve body (200) is provided with an air inlet (203), the valve body (200) is provided with an air chamber (204) arranged around a circumference of the valve spool 100), and air is introduced into or discharged from the air chamber (204) through the air inlet (203), so that the power assembly (310) drives the abutting part (320) to act on the pressure receiving portion (111) to close the squeezing channel (101).

9. The pinch valve (10) of claim 8, wherein the abutting part (320) penetrates through an inner wall of the air chamber (204), and abuts against the pressure receiving portion (111), and the power assembly (310) comprises:
a piston (311), installed in the air chamber (204);
a guide sleeve (312), fixed to an end of the piston (311) and arranged around the circumference of the valve spool (100), the guide sleeve (312) having an abutting inclined surface (3121); and
an elastic part (313), received in the air chamber (204) and acting on the guide sleeve (312), the abutting inclined surface (3121) abutting against the abutting part (320) under an action of the elastic part (313), and the abutting part (320) acting on the pressure receiving portion (111) to close the squeezing channel (101);
wherein, by introducing air into the air chamber (204), the piston (311) drives the guide sleeve (312) to slide along the air chamber (204) against an elastic force of the elastic part (313), and then the abutting part (320) retreats to open the squeezing channel (101).

10. The pinch valve (10) of claim 7, wherein a length of the first axis (a) is less than that of the second axis (b).

11. An electrolyte injection device, comprising the pinch valve (10) of claim 7, an electrolyte injection cup and an electrolyte injection nozzle, wherein the electrolyte injection cup and the electrolyte injection nozzle communicate with the liquid inlet (201) and the liquid outlet (202), respectively.

12. The electrolyte injection device of claim 11, wherein the valve body (200) is provided with an air inlet (203), the valve body (200) is provided with an air chamber (204) arranged around a circumference of the valve spool 100), and air is introduced into or discharged from the air chamber (204) through the air inlet (203), so that the power assembly (310) drives the abutting part (320) to act on the pressure receiving portion (111) to close the squeezing channel (101).

13. The electrolyte injection device of claim 12, wherein the abutting part (320) penetrates through an inner wall of the air chamber (204), and abuts against the pressure receiving portion (111), and the power assembly (310) comprises:
a piston (311), installed in the air chamber (204);
a guide sleeve (312), fixed to an end of the piston (311) and arranged around the circumference of the valve spool (100), the guide sleeve (312) having an abutting inclined surface (3121); and
an elastic part (313), received in the air chamber (204) and acting on the guide sleeve (312), the abutting inclined surface (3121) abutting against the abutting part (320) under an action of the elastic part (313), and the abutting part (320) acting on the pressure receiving portion (111) to close the squeezing channel (101);
wherein, by introducing air into the air chamber (204), the piston (311) drives the guide sleeve (312) to slide along the air chamber (204) against an elastic force of the elastic part (313), and then the abutting part (320) retreats to open the squeezing channel (101).

14. The electrolyte injection device of claim 11, wherein a length of the first axis (a) is less than that of the second axis (b).

## Patentansprüche

1. Ventilschieber (100), umfassend einen elastisch verformbaren Grundkörper (110), wobei der Grundkörper (110) mit einem Quetschkanal (101) und einem Druckaufnahmeabschnitt (111) versehen ist und zwei Enden des Grundkörpers (110) Öffnungen (102) aufweisen, die mit dem Quetschkanal (101) in Verbindung stehen;
wobei eine Innenwand des Quetschkanals zwei einander gegenüberliegend angeordnete Halbwandstrukturen (112) umfasst, wobei eine erste Achse (a) und eine zweite Achse (b), die senkrecht zueinander sind und sich an jeweiligen Mittelpunkten schneiden, in einem radialen Abschnitt des Quetschkanals (101) bereitgestellt sind, wobei die erste Achse (a) und die zweite Achse (b) gemeinsam einen Kreis oder eine Ellipse definieren und die zwei Halbwandstrukturen (112) auf zwei Seiten der zweiten Achse (b) verteilt sind und beide innerhalb des Kreises oder der Ellipse liegen;
wobei die zwei Halbwandstrukturen (112) durch Ausüben einer externen Kraft auf den Druckaufnahmeabschnitt (111) zum Schließen des Quetschkanals (101) zueinander hin bewegt werden;
wobei die Halbwandstrukturen (112) jeweils eine erste gekrümmte Wand (1121) und zweite gekrümmte Wände (1122) umfassen, die mit zwei Enden der ersten gekrümmten Wand (1121) verbunden sind;
wobei der Ventilschieber (100) **dadurch gekennzeichnet ist, dass**:
die erste gekrümmte Wand (1121) aus dem Quetschkanal (101) nach außen vorspringt, die zweiten gekrümmten Wände (1122) in das Innere des Quetschkanals (101) vorspringen, die erste Achse (a) die erste gekrümmte Wand (1121) in zwei Abschnitte im radialen Abschnitt des Quetschkanals (101) unterteilt und die zweiten gekrümmten Wände (1122) in einer von der ersten gekrümmten Wand (1121) weg führenden Erstreckungsrichtung allmählich in Richtung der zweiten Achse (b) konvergieren; und
eine Mitte des Grundkörpers (110) sich nach innen verengt und einen Verengungsteil (113) bildet, wobei der Druckaufnahmeabschnitt (111) am Verengungsteil (113) liegt und der Quetschkanal (101) nur an einer Position des Grundkörpers (110) gebildet ist, die dem Verengungsteil (113) entspricht, statt durch den gesamten Grundkörper (110) zu verlaufen.

2. Ventilschieber nach Anspruch 1, wobei sich im radialen Abschnitt des Quetschkanals (101) zwei zweite gekrümmte Wände (1122) am selben Ende der zwei Halbwandstrukturen (112) zur zweiten Achse (b) erstrecken und miteinander verbunden sind.

3. Ventilschieber nach Anspruch 1, wobei zwei zweite gekrümmte Wände (1122) am selben Ende der zwei Halbwandstrukturen (112) durch eine dritte gekrümmte Wand (114) verbunden sind; und im radialen Abschnitt des Quetschkanals (101) die zweite Achse (b) die dritte gekrümmte Wand (114) in zwei Abschnitte unterteilt und die dritte gekrümmte Wand (114) aus dem Zusammendrückkanal (101) nach außen vorspringt.

4. Ventilschieber nach Anspruch 3, wobei die dritte gekrümmte Wand (114) glatt mit zwei benachbarten zweiten gekrümmten Wänden (1122) verbunden ist.

5. Ventilschieber nach Anspruch 1, wobei die Halbwandstrukturen (112) jeweils zwei miteinander verbundene planare Wände (1123) umfassen und ein eingeschlossener Winkel zwischen den zwei planaren Wänden stumpf ist.

6. Ventilschieber nach einem der Ansprüche 1 bis 5, wobei eine Länge der ersten Achse (a) kleiner als die der zweiten Achse (b) ist.

7. Quetschventil (10), umfassend:
den Ventilschieber (100) nach einem der Ansprüche 1 bis 6;
einen Ventilkörper (200) mit einem Flüssigkeitseinlass (201) und einem Flüssigkeitsauslass (202), wobei der Ventilschieber (100) im Ventilkörper (200) aufgenommen ist und je eine der Öffnungen (102) an zwei Enden jeweils mit dem Flüssigkeitseinlass (201) und dem Flüssigkeitsauslass (202) in Verbindung steht; und
ein Stellglied (300), umfassend eine Leistungsbaugruppe (310) und einen Anlageteil (320), wobei die Leistungsbaugruppe (310) fähig ist, den Anlageteil (320) so anzutreiben, dass er auf den Druckaufnahmeabschnitt (111) einwirkt, um den Quetschkanal (101) zu schließen.

8. Quetschventil (10) nach Anspruch 7, wobei der Ventilkörper (200) mit einem Lufteinlass (203) versehen ist, der Ventilkörper (200) mit einer Luftkammer (204) versehen ist, die um einen Umfang des Ventilschiebers (100) herum angeordnet ist, und durch den Lufteinlass (203) Luft in die Luftkammer (204) eingeleitet oder daraus abgelassen wird, wodurch die Leistungsbaugruppe (310) den Anlageteil (320) so antreibt, dass er auf den Druckaufnahmeabschnitt (111) einwirkt, um den Quetschkanal (101) zu schließen.

9. Quetschventil (10) nach Anspruch 8, wobei der Anlageteil (320) durch eine Innenwand der Luftkammer (204) verläuft und am Druckaufnahmeabschnitt (111) anliegt, wobei die Leistungsbaugruppe (310) umfasst:
einen Kolben (311), der in der Luftkammer (204) installiert ist;
eine Führungshülse (312), die an einem Ende des Kolbens (311) fixiert und um den Umfang des Ventilschiebers (100) herum angeordnet ist, wobei die Führungshülse (312) eine schräge Anlagefläche (3121) aufweist; und
einen elastischen Teil (313), der in der Luftkammer (204) aufgenommen ist und auf die Führungshülse (312) einwirkt, wobei die schräge Anlagefläche (3121) unter Einwirkung des elastischen Teils (313) in Anlage an den Anlageteil (320) gelangt und der Anlageteil (320) auf den Druckaufnahmeabschnitt (111) einwirkt, um den Quetschkanal (101) zu schließen;
wobei durch Einleiten von Luft in die Luftkammer (204) der Kolben (311) die Führungshülse (312) entgegen einer Federkraft des elastischen Teils (313) die Luftkammer (204) entlang gleitend antreibt und der Anlageteil (320) dann zurückfährt, um den Quetschkanal (101) zu öffnen.

10. Quetschventil (10) nach Anspruch 7, wobei eine Länge der ersten Achse (a) kleiner als die der zweiten Achse (b) ist.

11. Elektrolyteinspritzvorrichtung, umfassend das Quetschventil (10) nach Anspruch 7, einen Elektrolyteinspritzbecher und eine Elektrolyteinspritzdüse, wobei der Elektrolyteinspritzbecher und die Elektrolyteinspritzdüse jeweils mit dem Flüssigkeitseinlass (201) und dem Flüssigkeitsauslass (202) in Verbindung stehen.

12. Elektrolyteinspritzvorrichtung nach Anspruch 11, wobei der Ventilkörper (200) mit einem Lufteinlass (203) versehen ist, der Ventilkörper (200) mit einer Luftkammer (204) versehen ist, die um einen Umfang des Ventilschiebers (100) herum angeordnet ist, und durch den Lufteinlass (203) Luft in die Luftkammer (204) eingeleitet oder daraus abgelassen wird, wodurch die Leistungsbaugruppe (310) den Anlageteil (320) so antreibt, dass er auf den Druckaufnahmeabschnitt (111) einwirkt, um den Quetschkanal (101) zu schließen.

13. Elektrolyteinspritzvorrichtung nach Anspruch 12, wobei der Anlageteil (320) durch eine Innenwand der Luftkammer (204) verläuft und am Druckaufnahmeabschnitt (111) anliegt, wobei die Leistungsbaugruppe (310) umfasst:
einen Kolben (311), der in der Luftkammer (204) installiert ist;
eine Führungshülse (312), die an einem Ende des Kolbens (311) fixiert und um den Umfang des Ventilschiebers (100) herum angeordnet ist, wobei die Führungshülse (312) eine schräge Anlagefläche (3121) aufweist; und
einen elastischen Teil (313), der in der Luftkammer (204) aufgenommen ist und auf die Führungshülse (312) einwirkt, wobei die schräge Anlagefläche (3121) unter Einwirkung des elastischen Teils (313) in Anlage an den Anlageteil (320) gelangt und der Anlageteil (320) auf den Druckaufnahmeabschnitt (111) einwirkt, um den Quetschkanal (101) zu schließen;
wobei durch Einleiten von Luft in die Luftkammer (204) der Kolben (311) die Führungshülse (312) entgegen einer Federkraft des elastischen Teils (313) die Luftkammer (204) entlang gleitend antreibt und der Anlageteil (320) dann zurückfährt, um den Quetschkanal (101) zu öffnen.

14. Elektrolyteinspritzvorrichtung nach Anspruch 11, wobei eine Länge der ersten Achse (a) kleiner als die der zweiten Achse (b) ist.

## Revendications

1. Un tiroir de soupape (100), composé d'un corps principal élastiquement déformable (110), le corps principal (110) étant doté d'un canal de compression (101) et d'une partie réceptrice de pression (111), et deux extrémités du corps principal (110) ayant des ouvertures (102) communiquant avec le canal de compression (101) ;
dans lequel une paroi intérieure du canal de compression comprend deux structures de demi-paroi disposées de manière opposée (112), un premier axe (a) et un deuxième axe (b) perpendiculaires l'un à l'autre et entrecroisés à des points médians respectifs sont disposés dans une section radiale du canal de compression (101), le premier axe (a) et le deuxième axe (b) définissent conjointement un cercle ou une ellipse, et les deux structures de demi-paroi (112) sont réparties sur deux côtés du deuxième axe (b) et sont toutes deux situées à l'intérieur du cercle ou de l'ellipse ;
dans lequel les deux structures de demi-paroi (112) sont déplacées pour être plus proches l'une de l'autre en appliquant une force externe à la partie réceptrice de pression (111) pour fermer le canal de compression (101) ;
dans lequel chacune des structures de demi-paroi (112) comprend une première paroi incurvée (1121) et une deuxième paroi incurvée (1122) reliée aux deux extrémités de la première paroi incurvée (1121) ;
la tiroir de soupape (100) étant **caractérisé en ce que** :
la première paroi incurvée (1121) dépasse vers l'extérieur du canal de compression (101), la deuxième paroi incurvée (1122) dépasse vers l'intérieur du canal de compression (101), le premier axe (a) divise la première paroi incurvée (1121) en deux sections dans la section radiale du canal de compression (101), et les deuxièmes parois incurvées (1122) convergent progressivement vers le deuxième axe (b) dans une direction s'étendant loin de la première paroi incurvée (1121) ; et
un centre du corps principal (110) se contracte vers l'intérieur pour former une partie de contraction (113), la partie réceptrice de pression (111) se trouve à la partie de contraction (113), et le canal de compression (101) n'est formé qu'à une position du corps principal (110) correspondant à la partie de contraction (113) plutôt qu'à travers tout le corps principal (110).

2. Tiroir de soupape selon la revendication 1, dans lequel dans la section radiale du canal de compression (101), deux deuxièmes parois incurvées (1122) à la même extrémité des deux structures de demi-parois (112) s'étendent jusqu'au deuxième axe (b) et sont reliées entre elles.

3. Tiroir de soupape selon la revendication 1, dans lequel deux deuxièmes parois incurvées (1122) à la même extrémité des deux structures de demi-paroi (112) sont reliées par une troisième paroi incurvée (114) ; et dans la section radiale du canal de compression (101), le deuxième axe (b) divise la troisième paroi incurvée (114) en deux sections, et la troisième paroi incurvée (114) dépasse vers l'extérieur du canal de compression (101).

4. Tiroir de soupape selon la revendication 3, dans lequel la troisième paroi incurvée (114) est reliée de manière fluide à deux deuxièmes parois incurvées (1122) en butées.

5. Tiroir de soupape selon la revendication 1, dans lequel chaque structure de demi-paroi (112) comprend deux parois planes interconnectées (1123), et l'angle inclus entre les deux parois planes est obtus.

6. Tiroir de soupape selon l'une des revendications 1 à 5, dans lequel la longueur du premier axe (a) est inférieure à celle du deuxième axe (b).

7. Une vanne à manchon (10), comprenant :
le tiroir de soupape (100) selon l'une des revendications 1 à 6 ;
un corps de soupape (200), avec une entrée de liquide (201) et une sortie de liquide (202), le tiroir de soupape (100) étant reçu dans le corps de soupape (200), et les ouvertures (102) aux deux extrémités communiquant respectivement avec l'entrée de liquide (201) et la sortie de liquide (202) ; et
un actionneur (300), composé d'un ensemble de puissance (310) et d'une pièce en butée (320), l'ensemble de puissance (310) étant capable de faire fonctionner la partie en butée (320) pour agir sur la partie réceptrice de pression (111) afin de fermer le canal de compression (101).

8. La vanne à manchon (10) selon la revendication 7, dans laquelle le corps de soupape (200) est doté d'une entrée d'air (203), le corps de soupape (200) est doté d'une chambre à air (204) disposée autour d'une circonférence du tiroir de soupape 100), et de l'air est introduit ou évacué par la chambre à air (204) par l'entrée d'air (203), de sorte que l'ensemble de puissance (310) entraîne la partie en butée (320) pour agir sur la partie réceptrice de pression (111) afin de fermer le canal de compression (101).

9. La vanne à manchon (10) selon la revendication 8, dans laquelle la partie en butée (320) traverse une paroi intérieure de la chambre à air (204) et est en butée à la partie réceptrice de pression (111), et l'ensemble de puissance (310) comprend :
un piston (311), installé dans la chambre à air (204) ;
un manchon de guidage (312), fixé à une extrémité du piston (311) et disposé autour de la circonférence du tiroir de soupape (100), le manchon de guidage (312) ayant une surface inclinée en butée (3121) ; et
une partie élastique (313), reçue dans la chambre à air (204) et agissant sur le manchon de guidage (312), la surface inclinée en butée (3121) étant en butée contre la partie en butée (320) sous une action de la partie élastique (313), et la partie en butée (320) agissant sur la partie réceptrice de pression (111) pour fermer le canal de compression (101) ;
dans lequel, en introduisant de l'air dans la chambre à air (204), le piston (311) entraîne le manchon de guidage (312) pour glisser le long de la chambre à air (204) contre une force élastique de la partie élastique (313), puis la partie en butée (320) se retire pour ouvrir le canal de compression (101).

10. La vanne à manchon (10) selon la revendication 7, dans laquelle la longueur du premier axe (a) est inférieure à celle du deuxième axe (b).

11. Un dispositif d'injection d'électrolytes, comprenant la vanne à manchon (10) selon la revendication 7, une coupelle d'injection d'électrolytes et une buse d'injection d'électrolytes, dans lequel la coupelle d'injection d'électrolytes et la buse d'injection d'électrolytes communiquent respectivement avec l'entrée de liquide (201) et la sortie de liquide (202).

12. Le dispositif d'injection d'électrolytes selon la revendication 11, dans lequel le corps de soupape (200) est équipé d'une entrée d'air (203), le corps de soupape (200) d'une chambre à air (204) disposée autour d'une circonférence du tiroir de soupape 100), et de l'air est introduit ou évacué depuis la chambre à air (204) par l'entrée d'air (203), de sorte que l'ensemble de puissance (310) entraîne la partie en butée (320) pour agir sur la partie réceptrice de pression (111) afin de fermer le canal de compression (101).

13. Le dispositif d'injection d'électrolytes selon la revendication 12, dans lequel la partie en butée (320) traverse une paroi intérieure de la chambre à air (204) et est en butée contre la partie réceptrice de pression (111), et l'ensemble de puissance (310) comprend :
un piston (311), installé dans la chambre à air (204) ;
un manchon de guidage (312), fixé à une extrémité du piston (311) et disposé autour de la circonférence du tiroir de soupape (100), le manchon de guidage (312) ayant une surface inclinée en butée (3121) ; et
une partie élastique (313), reçue dans la chambre à air (204) et agissant sur le manchon de guidage (312), la surface inclinée en butée (3121) étant en butée contre la partie en butée (320) sous l'action de la partie élastique (313), et la partie en butée (320) agissant sur la partie réceptrice de pression (111) pour fermer le canal de compression (101) ;
dans lequel, en introduisant de l'air dans la chambre à air (204), le piston (311) entraîne le manchon de guidage (312) pour glisser le long de la chambre à air (204) contre une force élastique de la partie élastique (313), puis la partie en butée (320) se retire pour ouvrir le canal de compression (101).

14. Le dispositif d'injection d'électrolytes selon la revendication 11, dans lequel la longueur du premier axe (a) est inférieure à celle du deuxième axe (b).
